# EUROPEAN PATENT APPLICATION

(11) **EP 2 624 328 A2**
(43) Date of publication of application: **07.08.2013**
(21) Application number: 12793353.9
(22) Date of filing: 06.04.2012
(51) Int. Cl.: H01M 2/04, H01M 2/12

(54) **COVER FOR A BATTERY HAVING A DUAL SEALING STRUCTURE**

(30) Priority: 31.05.2011 KR 20110052122
(71) Applicant: Global Battery Co., Ltd., Seoul 135-080 (KR)
(72) Inventor: LEE, Kyu Hyeong, Gwangju 506-251 (KR); KIM, Sung Joon, Gwangju 506-306 (KR); KIM, Nam Il, Gwangju 500-110 (KR)
(74) Representative: Palmer, Jonathan R.
(86) International application number: PCT/KR2012/002650
(87) International publication number: WO 2012/165760

(57) **Abstract**

Disclosed herein is a cover having a double sealing structure for a storage battery. The cover includes: a lower cover body having cells, each of which has an inlet hole communicating with the storage battery body so that the electrolyte is injected into the storage battery body through the inlet hole; and an upper cover body which is coupled to an upper portion of the lower cover body. An exhaust port is formed on each of opposite ends of the upper cover body so that electrolyte or gas is discharged out of the storage battery through the exhaust port. In the lower cover body, exhaust cells are formed at positions closer to a medial portion of the storage battery than are respective outermost cells. Each exhaust cell having an outlet passage that guides leaked electrolyte or gas towards the exhaust port.

## Description

### Technical Field

The present invention relates, in general, to covers having double sealing structures for storage batteries and, more particularly, to a cover having a double sealing structure for a storage battery which is configured such that a tiltable angle of the storage battery is increased, thereby reducing a loss of electrolyte which may leak as the storage battery is tilted, and which increases the capacity of a space for receiving leaked electrolyte so that the amount of electrolyte discharged out of the storage battery can be reduced.

### Background Art

Generally, storage batteries, particularly lead-acid batteries, have exhaust ports to discharge internal gas generated when the batteries are charged or discharged. To prevent leakage or splashing of electrolyte (which may occur due to shaking of the battery when in use) and discharge only generated gas, each exhaust chamber includes not only an exhaust port which discharges gas introduced from the exhaust chamber, but also an introduction port (formed in an upper end of the storage battery, for example, in a cover for the battery) into which gas generated from the exhaust chamber is introduced. Further, many splash-proof plates are labyrinthically provided in the exhaust chamber, and a lower surface of the exhaust chamber is inclined towards the introduction port.

Such a conventional structure was proposed in Japanese Utility Model Publication No. 54-131037U. In the conventional exhaust structure, because the inclined surface is formed in the lower surface of the exhaust chamber, although leaked or splashed electrolyte that enters the discharge chamber is blocked by the splash-proof plates and is not temporarily discharged through an exhaust nozzle, the blocked electrolyte remains on lower ends of the splash-proof plates without being removed from the splash-proof plates.

### Disclosure

### Technical Problem

In the conventional structure, when the storage battery shakes, the electrolyte enters the exhaust chamber associated with the adjacent battery cell. As a result, there is a possibility of electrolyte leaking out of the storage battery through the exhaust nozzle or onto a portion of the storage battery such as a filter chamber in a rupture-prevention filter.

Furthermore, in the conventional storage battery, even when the storage battery is inclined at a comparatively small angle, electrolyte may easily leak out through the exhaust port depending on the position of the exhaust port. Particularly, in the case of a lead-acid battery for vehicles, when a vehicle runs on a slope or is parked on a slope, because the lead-acid battery is tilted by the vehicle which is in the inclined state, electrolyte may leak out of the battery cover through the exhaust port despite the cover having a double sealing cover structure. In this case, electrolyte may corrode electronic components of the vehicle or markedly reduce the lifetime of the storage battery. Thereby, the safety of a driver or passenger cannot be ensured, and economic loss occurs.

### Technical Solution

Accordingly, the present invention has been made keeping in mind the above problems occurring in the prior art, and an object of the present invention is to provide a cover having a double sealing structure for a storage battery in which an exhaust port is formed in a central portion of the cover, and a plurality of cells are successively formed at a side of the cover, wherein an exhaust passage is formed such that an outermost cell is connected to the exhaust port.

### Advantageous Effects

As described above, in a cover according to the present invention, an exhaust port is formed in a cell that is disposed at a position closer to a medial portion of the cover than is an outermost cell. Therefore, the capacity of space within the cover which can receive electrolyte leaked from the storage battery body is markedly increased. Furthermore, the range of the angle, to which the storage battery can be tilted without electrolyte leaking out of the storage battery, can be markedly increased. Therefore, the present invention can reduce a loss of electrolyte and is advantageous in terms of maintenance procedures such as recharging.

### Description of Drawings

Fig. 1 is a perspective view illustrating a cover having a double sealing structure for storage batteries, according to the present invention;
Fig. 2 is an exploded perspective view of the cover having the double sealing structure for storage batteries according to the present invention;
Fig. 3 is a plan view illustrating a lower cover body of the cover having the double sealing structure for storage batteries according to the present invention;
Fig. 4 is an enlarged plan view showing a portion of the lower cover body of the cover having the double sealing structure for storage batteries according to the present invention;
Fig. 5 is a plan view illustrating an upper cover body of the cover having the double sealing structure for storage batteries according to the present invention;
Fig. 6 is a side view showing the upper cover body of the cover having the double sealing structure for storage batteries according to the present invention; and

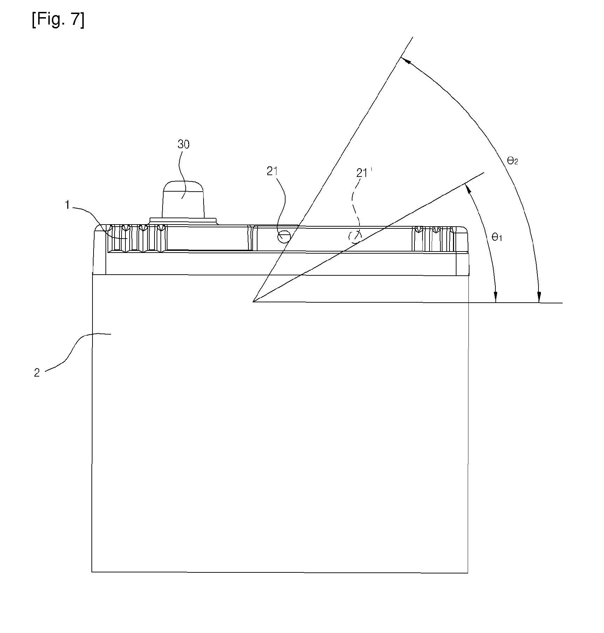

Fig. 7 is a side view comparing a tiltable range of the cover having the double sealing structure for storage batteries with that of a conventional technique.

### *Description of the Reference Numerals in the Drawings*

1: storage battery cover 10: lower cover body
10a: terminal area 10b: cell area
11: outermost cell 12: exhaust cell
A: exhaust path 14: exhaust part
15: peripheral wall 16: collection part
17: guide wall 18: partition
20: upper cover body 30: electrode
40: handle receiving depression 111: first protective wall
112: first concave part 113: first inlet hole
114: first protrusion wall 115: first receiving wall
116: first outlet 121: second protective wall
122: second concave part 123: second inlet hole
124: second protrusion wall 125: second receiving wall
126: second outlet 127: second partition
128: third outlet 161: return hole
171: first guide wall 172: second guide wall
173: third guide wall

### Best Mode

The present invention provides a cover having a double sealing structure for a storage battery including a storage battery body containing electrolyte therein. The cover seals an upper surface of the storage battery body and includes: a lower cover body comprising a plurality of cells each of which has an inlet hole communicating with the storage battery body disposed under the lower cover body so that the electrolyte is injected into the storage battery body through the inlet hole; and an upper cover body coupled to an upper portion of the lower cover body, with an exhaust port formed on each of opposite ends of the upper cover body so that electrolyte or gas is discharged out of the storage battery through the exhaust port. In the lower cover body, exhaust cells are formed at positions closer to a medial portion of the storage battery than are respective outermost cells that are disposed at outermost positions. Each of the exhaust cells has an outlet passage that guides leaked electrolyte or gas towards the exhaust port.

In order to accomplish the above object, the present invention provides the following embodiments.

The present invention provides a cover having a double sealing structure for a storage battery comprising a storage battery body containing electrolyte therein, the cover sealing an upper surface of the storage battery body and including: a lower cover body comprising a plurality of cells each of which has an inlet hole communicating with the storage battery body disposed under the lower cover body so that the electrolyte is injected into the storage battery body through the inlet hole; and an upper cover body coupled to an upper portion of the lower cover body, with an exhaust port formed on each of opposite ends of the upper cover body so that electrolyte or gas is discharged out of the storage battery through the exhaust port, wherein in the lower cover body, exhaust cells are formed at positions closer to a medial portion of the storage battery than are respective outermost cells that are disposed at outermost positions, each of the exhaust cells having an outlet passage that guides leaked electrolyte or gas towards the exhaust port.

In a second embodiment of the present invention, the exhaust port may be formed in a central portion of the upper cover body.

In a third embodiment of the present invention, the lower cover body may include: a partition comprising a pair of longitudinal partitions facing each other and extending in a longitudinal direction of the storage battery to define the outermost cells and the exhaust cells, and a plurality of lateral partitions disposed between the pair of longitudinal partitions at positions spaced apart from each other, the lateral partitions extending in a lateral direction of the storage battery; a guide wall comprising a pair of walls spaced apart from each other, the guide wall extending through the partition in a transverse direction of the partition so that electrolyte can flow between the corresponding outermost cell and the corresponding exhaust cell; and an exhaust part disposed in each of opposite ends of the lower cover body and extending in the lateral direction of the storage battery to form a space therein so that electrolyte transferred from the corresponding exhaust cell through the outlet passage is received in the exhaust part.

In a fourth embodiment of the present invention, each of the outermost cells may include: a concave part forming a bottom surface inclined downwards towards a first inlet hole formed in the outermost cell to communicate with an interior of the storage battery body; a first protective wall disposed on the inclined bottom surface of the concave part, the first protective wall extending at a first end thereof from the corresponding lateral partition that separates the outermost cell from the adjacent cell, such that a second end of the first protective wall is spaced apart from the corresponding longitudinal partition to form an outlet for electrolyte leaked from the inlet hole; a first protrusion wall protruding from the corresponding longitudinal partition between the first inlet hole and the first outlet; and a first receiving wall extending in an inclined direction from the lateral partition disposed at a position opposite to the lateral partition that separates the outermost cell from the adjacent cell, so that a space for receiving electrolyte leaked from the first outlet is defined.

In a fifth embodiment of the present invention, the outlet passage is formed by opening a portion of the corresponding longitudinal partition that is brought into close contact with the exhaust part, so that the corresponding exhaust cell communicates with the exhaust part through the outlet passage.

In a sixth embodiment of the present invention, each of the exhaust cells may include: a second concave part forming a bottom surface inclined downwards towards a second inlet hole formed in the exhaust cell to communicate with an interior of the storage battery body; a second protective wall disposed on the inclined bottom surface of the second concave part, the second protective wall extending at a first end thereof from the corresponding lateral partition that separates the exhaust cell from an adjacent cell; a third protective wall disposed at a position spaced apart from the second protective wall and extending towards the corresponding longitudinal partition such that a space is formed between a first end of the third protective wall and the longitudinal partition, thus forming a second outlet through which electrolyte leaked from or returned to the second inlet hole flows; a second receiving wall extending diagonally from the lateral partition disposed at a position opposite to the lateral partition that separates the exhaust cell from an adjacent cell; and a second protrusion wall protruding from the corresponding longitudinal partition in front of the second outlet.

In a seventh embodiment of the present invention, the third protective wall may extend in an inclined direction such that a second end thereof faces the second receiving wall, thus forming a space for receiving electrolyte transferred from the guide wall.

In an eighth embodiment of the present invention, the third protective wall may be spaced apart from the second receiving wall to form an inlet communicating with the second concave part.

In a ninth embodiment of the present invention, a bottom surface of each of the outermost cell and the exhaust cell may be inclined downwards towards the corresponding inlet hole.

In a tenth embodiment of the present invention, the guide wall may include: first guide walls disposed in each of the outermost cell and extending in the lateral direction to guide electrolyte, the first guide walls being spaced apart from each other; second guide walls provided in each of the lateral partitions that separate the cells from each other and extending in a transverse direction of the lateral partition, the second guide walls being spaced apart from each other to form a passage through which electrolyte flows, so that the electrolyte transferred from the first guide walls flows into the corresponding exhaust cell through the passage; and a third guide wall disposed in the exhaust cell and extending a predetermined length such that a medial portion of the third guide is disposed adjacent to ends of the second guide walls so that the electrolyte transferred by the second guide wall is guided towards the outlet passage.

In an eleventh embodiment of the present invention, each of the second guide walls may extend in a V shape.

In a twelfth embodiment, the present invention provides a cover having a double sealing structure for a storage battery comprising a storage battery body containing electrolyte therein, the cover sealing an upper surface of the storage battery body and including: a lower cover body comprising a terminal area having electrodes through which electricity flows from or into the storage battery body, and a cell area having a plurality of cells each of which has an inlet hole so that electrolyte is injected into the storage battery body through the inlet hole; and an upper cover body comprising a plurality of cells corresponding to the cells of the cell area of the lower cover body, the upper cover body sealing an upper surface of the cell area, wherein the plurality of cells of the cell area of the lower cover body are arranged in one direction, and the cell area has exhaust parts on respective opposite ends thereof, each of the exhaust parts extending in a vertical direction to form a space in which electrolyte leaked from the inlet hole is collected, the upper cover body comprises upper exhaust parts each of which has a shape corresponding to a shape of the corresponding exhaust part of the lower cover body, and an exhaust hole is formed in a side surface of the upper exhaust part so that electrolyte or gas collected in the corresponding exhaust part is discharged out of the storage battery through the exhaust hole.

In a thirteenth embodiment of the present invention, in the cell area of the lower cover body, among the cells arranged in the one direction, each of the cells that are disposed at positions closer to a medial portion of the storage battery than are the respective cells that are disposed at outermost positions may comprise an exhaust cell having an outlet passage communicating with the corresponding exhaust part so that leaked electrolyte or gas is transferred into the exhaust part through the outlet passage.

In a fourteenth embodiment of the present invention, the cell area may be partitioned by a plurality of lateral partitions into a plurality of portions, each of the lateral partitions comprising a pair of guide walls extending through the lateral partition in a transverse direction of the lateral partition, the guide walls being spaced apart from each other to form a passage through which leaked electrolyte flows between the corresponding adjacent cells.

In a fifteenth embodiment of the present invention, each of the exhaust cell may include: a concave part forming a bottom surface inclined downwards towards the inlet hole formed in the exhaust cell to communicate with an interior of the storage battery body; a second protective wall disposed on the inclined bottom surface of the concave part, the second protective wall extending at a first end thereof from the corresponding lateral partition that separates the exhaust cell from an adjacent cell; a third protective wall disposed at a position spaced apart from the second protective wall and extending towards the corresponding longitudinal partition such that a second outlet is formed between the third protective wall and the longitudinal partition so that electrolyte leaked out from or returned to the inlet hole flows through the second outlet; a receiving wall extending diagonally from the lateral partition disposed at a position opposite to the lateral partition that separates the exhaust cell from the adjacent cell; and a protrusion wall protruding from the corresponding longitudinal partition in front of the second outlet.

In a sixteenth embodiment of the present invention, the third protective wall may be bent and extended in an inclined direction such that an end thereof faces the second receiving wall, thus forming a space for receiving electrolyte transferred from the guide wall.

In a seventeenth embodiment of the present invention, the cell area may have a bottom surface inclined downwards towards the inlet holes.

### Mode for Invention

Hereinafter, a preferred embodiment of a cover having a double sealing structure for storage batteries, according to the present invention, will be described in detail with reference to the attached drawings.

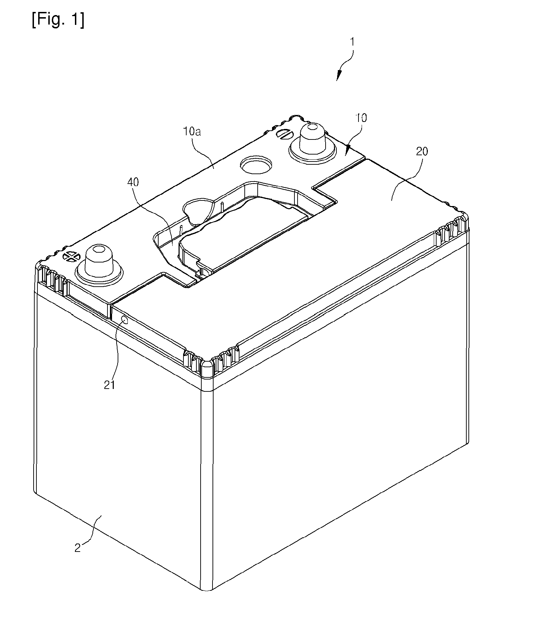

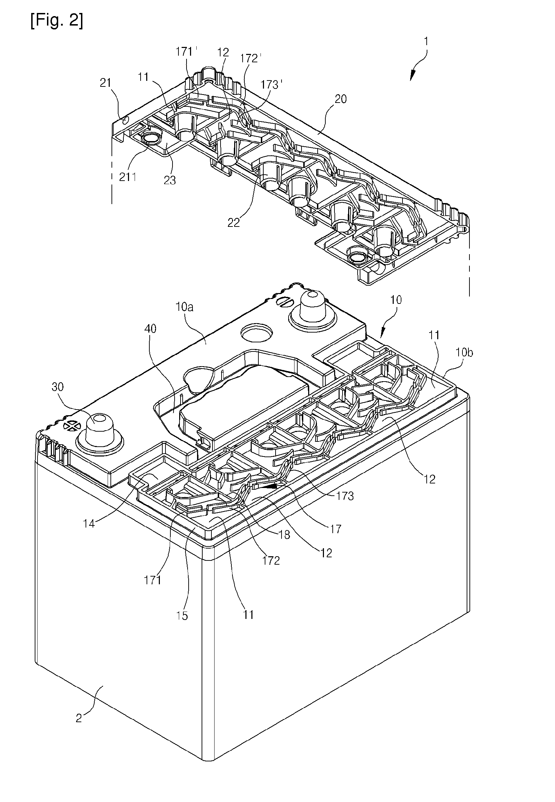

Fig. 1 is a perspective view illustrating a cover having a double sealing structure for storage batteries, according to the present invention. Fig. 2 is an exploded perspective view of the cover having the double sealing structure for storage batteries according to the present invention.

Referring to Figs. 1 and 2, the cover having the double sealing structure for storage batteries according to the present invention includes a storage battery body 2 which contains an electrolyte therein, and a storage battery cover 1 which seals the storage battery body 2.

The storage battery cover 1 includes a lower cover body 10 and an upper cover body 20. The lower cover body 10 covers an upper end of the storage battery body 2 and has electrodes and inlet holes 113 and 123 through which the electrolyte is injected into the storage battery body 2. The upper cover body 20 covers the lower cover body 10.

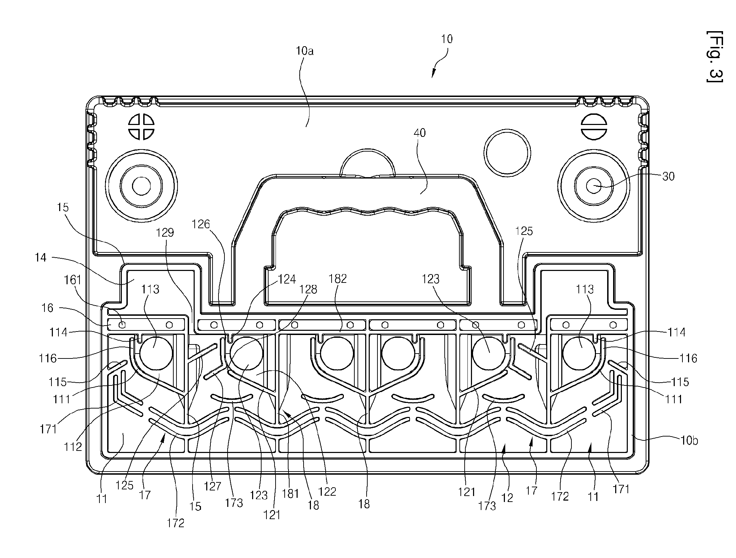

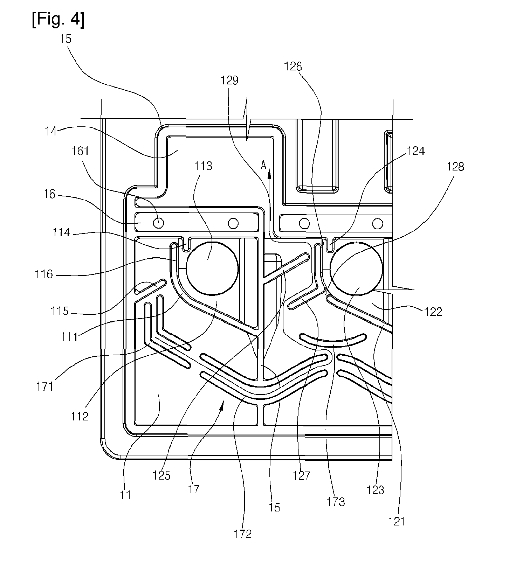

The lower cover body includes a terminal area 10a and a cell area 10b. The terminal area 10a has the electrodes 30 through which electricity flows, a handle (not shown), and a handle receiving depression 40 in which the handle is rotatably received. The cell area 10b includes one or more cells each of which has at least one inlet hole. The lower cover body 10 will be explained with reference to Figs. 3 and 4.

Fig. 3 is a plan view illustrating the lower cover body of the cover having the double sealing structure for storage batteries according to the present invention. Fig. 4 is an enlarged plan view showing a portion of the lower cover body of the cover having the double sealing structure for storage batteries according to the present invention.

In the cell area 10b of the lower cover body 10, the cells, each of which has at least one inlet hole 113, 123 through which the electrolyte is injected into the storage battery, are successively arranged and are separated from each other by partitions 18. Here, the cells comprise outermost cells 11 which are disposed at the outermost positions, and exhaust cells 12, each of which is disposed adjacent to the corresponding outermost cell 11 and has an exhaust path A through which spilled electrolyte and gas is discharged.

As such, the cells are provided in the cell area 10b. The bottom surface of each cell is preferably inclined towards the corresponding inlet hole 113, 123 so that electrolyte leaked from the inlet hole 113, 123 can be easily collected.

Furthermore, the lower cover body 10 includes: a peripheral wall 15, which protrudes upwards from the surface of the lower cover body 10 and forms space in which the cells are disposed; the partitions 18, which are disposed inside the peripheral wall 15 at positions spaced apart from each other at regular intervals and protrude upwards from the surface of the lower cover body 10 to partition the space into several spaces corresponding to the respective cells; the exhaust cells 12, which have the exhaust paths A through which electrolyte or gas leaked from the outermost cells 11 or other cells is discharged; exhaust parts 14, which collect electrolyte or gas which flows through the exhaust paths A and discharge the electrolyte or gas through exhaust ports formed in the upper cover body 20; and guide walls 17 which guide electrolyte leaked from the cells towards the exhaust cells 12.

The peripheral wall 15 protrudes upwards from the lower cover body 10 and forms a border of the area including the inlet holes 113 and 123 through which electrolyte is supplied. The peripheral wall 15 is configured such that it encloses both the partitioned spaces corresponding to the respective cells and the area where collection parts 16 and the exhaust parts 14 are formed.

The partitions 18 partition the space in the peripheral wall 15 into several spaces such that the cells are separated from each other at regular intervals. The partitions 18 include lateral partitions 181 which extend in the lateral direction of the cover, and longitudinal partitions 182 which extend in the longitudinal direction of the cover. The lateral partitions 181 and the longitudinal partitions 182 separate the outermost cells 11, the exhaust cells 12 and the other cells from each other. Here, the outermost cells 11 are respectively disposed in opposite ends of the space defined in the peripheral wall. The exhaust cells 12 are disposed adjacent to the respective outermost cells 11. Of course, at least one cell may be further provided between the exhaust cells 12.

Each collection part 16 has at least one return hole 161 which collects electrolyte that flows over the partitions 18 and returns the electrolyte into the storage battery body 2. Here, the collection part 16 is formed in a space which is disposed adjacent to one end of each cell and is partitioned from the cell by the associated partition 18.

The outermost cells 11 are respectively disposed in the opposite ends of the lower cover body 10. If the storage battery is tilted in one direction, electrolyte leaked from the cells flows into the outermost cells 11. Each outermost cell 11 includes the first inlet hole 113 through which electrolyte is supplied into or leaked out from the storage battery body, a first protective wall 111 which extends from the corresponding partition 18 and encloses a portion of the first inlet hole 113, a first concave part 112 which forms a bottom surface that extends such that it is inclined downwards from a lower end of the first protective wall 111 to the first inlet hole 113, a first outlet 116 which is a space defined between an end of the first protective wall 111 and the corresponding longitudinal partition and functions as a passage through which electrolyte leaked from the inlet hole 113 flows, and a first protrusion wall 114 which is disposed adjacent to the first outlet.

The first inlet hole 113 is an opening through which electrolyte is supplied into the storage battery. The first inlet hole 113 is connected to the storage battery body 2 which is disposed below it. A worker can introduce electrolyte into the storage battery through the first inlet hole 113. Here, the first inlet hole 113 conducts the same role of the second inlet hole 123 of the exhaust cell 12. Each cell has an inlet hole through which electrolyte can be charged into the cell.

The first protective wall 111 extends at a first end thereof from the corresponding lateral partition 181, which separates the outermost cell 11 from the cell disposed at a position closer to the medial portion of the lower cover body than is the outermost cell 11, for example, from the exhaust cell 12. The first protective wall 111 is curved in a shape in which it encloses the first inlet hole 113. A second end of the first protective wall 111 is spaced apart from the longitudinal partition 182 by a predetermined distance such that the first outlet 116, through which electrolyte leaked from the first inlet hole 113 flows, is defined between the second end of the first protective wall 111 and the longitudinal partition 182.

The first protrusion wall 114 protrudes inwards ahead of the space defined between the first protective wall 111 and the longitudinal partition 182 so that electrolyte leaked from the first inlet hole 113 can be prevented from directly flowing out through the first outlet 116.

Here, the end of the first protective wall 111 is spaced apart from the corresponding longitudinal partition 18 by a predetermined distance so that the first outlet 116 is defined therebetween. Further, the first protrusion wall 114 protrudes a predetermined length in front of the first outlet 116 and guides electrolyte leaked from the first inlet hole 113 such that the electrolyte can return to the first inlet hole 113 along the first concave part 112 after colliding with the surface of the first protrusion wall 114 rather than entering the first outlet 116. Thereby, the amount of electrolyte that passes through the first outlet 116 can be reduced, and an excessively large amount of electrolyte can be prevented from being leaked at one time.

A first receiving wall 115 extends at an angle from a portion of the peripheral wall 15 that forms an outer side wall of the outermost cell 11. The first receiving wall 115 forms space so that a predetermined amount of electrolyte leaked from the first outlet 116 can be received in the space defined by the first receiving wall 115.

Each exhaust cell 12 is disposed adjacent to an inner side wall of the corresponding outermost cell 11 so that the exhaust path A is defined between the exhaust cell 12 and the outermost cell 11. In detail, the exhaust cell 12 includes the second inlet hole 123 through which electrolyte is supplied into or leaked out from the storage battery body, a second protective wall 121 which extends from the corresponding partition 18 that separates the second protective wall 121 from the adjacent cell and defines a space in which the second inlet hole 123 is formed, a second concave part 122 which forms a bottom surface that extends such that it is inclined downwards from a lower end of the second protective wall 121 to the second inlet hole 123, a third protective wall 127 which is spaced apart from an end of the second protective wall 121 and forms a space in which the second inlet hole 123 is formed, a second protrusion wall 124 which protrudes from the corresponding longitudinal partition 182 and is spaced apart from an end of the third protective wall 127 by a predetermined distance to form a second outlet 126, a second receiving wall 125 which extends from the corresponding lateral partition 181, and an outlet passage 129 which is connected to the corresponding exhaust part 14.

The second inlet hole 123 is an opening which is connected to the storage battery body 2 such that electrolyte can be supplied into the storage battery body 2. Therefore, the worker can introduce electrolyte into the storage battery body 2 through the second inlet hole 123.

The second protective wall 121 extends at a first end thereof from the corresponding lateral partition 181, which separates the exhaust cell 12 from the cell disposed at a position closer to the medial portion of the lower cover body than is the exhaust cell 12. In detail, the second protective wall 121 extends a predetermined length in a curved shape in which it encloses a portion of the space which has the first inlet hole 113. Here, the second protective wall 121 is spaced apart from the third protective wall 127 by a predetermined distance so that a first inlet 128 is formed between the second protective wall 121 and the third protective wall 127 such that electrolyte leaked from the outermost cell 11 can enter the second inlet hole 123 after passing through the first inlet 128.

The second protrusion wall 124 extends from a side surface of the corresponding longitudinal partition 182 and functions to return electrolyte leaked from the second inlet hole 123 to the second inlet hole 123 and partially block the second outlet 126 such that an excessive amount of electrolyte can be prevented from being leaked at one time.

The second receiving wall 125 extends diagonally from the lateral partition 181 which separates the outermost cell 11 from the exhaust cell 12. The end of the second receiving wall 125 is spaced apart from the third protective wall 127 so that a space is defined therebetween. The second receiving wall 125 partitions an area where the outlet passage 129 is disposed into two parts and forms the comparatively narrow space between it and the third protective wall 127 so that an excessive amount of electrolyte is prevented from flowing out at one time.

The third protective wall 127 is bent to have an 'L' shape. A part of the third protective wall 127 that extends in the lateral direction faces the second inlet hole 123, and a part of the third protective wall 127 that extends in the longitudinal direction is spaced apart from the second protective wall 121 to guide electrolyte flowing from the outermost cell 11 towards the first outlet 116.

The outlet passage 129 is formed by a space between the collection parts 16 which are respectively provided on the end of the outermost cell 11 and the end the exhaust cell 12.

The guide walls 17 are two walls which are spaced apart from each other by a predetermined distance to form a passage through which leaked electrolyte flows. The guide walls 17 are disposed between the adjacent cells and extend predetermined lengths into the adjacent cells to function as a passage through which leaked electrolyte flows.

Particularly, the guide walls 17 extend between the lateral partitions 181 in the longitudinal direction and form a passage through which electrolyte flows between the outermost cell 11 and the exhaust cell 12. For this, the guide walls 17 comprise first guide walls 171 which guide electrolyte drawn from the first inlet hole 113 of the outermost cell 11 and/or the exhaust cell 12 or other cells, second guide walls 172 which guide electrolyte leaked from the outermost cell 11 and/or the other cells towards the outermost cell 11 or the exhaust cell 12, and a third guide wall 173 which guides electrolyte, which is drawn from the exhaust cell 12 into the second guide walls 172, towards the outlet passage 129.

When the storage battery is tilted such that the outermost cell 11 of the cells is disposed at the lowermost position, space between the first guide walls 171 is filled with electrolyte leaked from the first inlet hole 113 and, thereafter, the first guide walls 171 guides the electrolyte into space between the second guide walls 172. In the same manner, the first guide walls 171 are two walls which are spaced apart from each other by a predetermined distance.

The second guide walls 172 are two peripheral walls 15 which are spaced apart from each other by a predetermined distance and longitudinally extend from the lateral partition 181 between the outermost cell 11 and the exhaust cell 12.

Here, each second guide wall 172 extends in a 'V' shape based on the lateral partition 181 and guides electrolyte leaked from the outermost cell 11 into the outlet passage 129 or the first inlet 128. Also, the second guide walls 172 guide electrolyte, which is leaked from the exhaust cell 12 or the cell that is closer to the medial portion of the lower cover body than is the exhaust cell 12, towards the outermost cell 11 and/or the outlet passage 129.

The third guide wall 173 is disposed adjacent to a space defined between ends of the second guide walls 172 and extends in the longitudinal direction. The third guide wall 173 functions to guide electrolyte, which is drawn from the cell that is closer to the medial portion of the lower cover body than is the outermost cell 11 or the exhaust cell 12, towards the first outlet 116 and the outlet passage.

The two second guide walls 172 longitudinally extend from each lateral partition 181 which separates the corresponding adjacent cells from each other. The ends of the two second guide walls 172 are spaced apart from the ends of the adjacent two second guide walls 172 by a predetermined distance.

The third guide wall 173 is formed in each of the outermost cells, the exhaust cells 12 and the other cells. The third guide wall 173 longitudinally extends in front of the space between the ends of the second guide walls 172. In other words, the second guide walls 172 are provided on the respective lateral partitions 181. The second guide walls 172 provided on each lateral partition 181 are spaced apart from the second guide walls 172 provided on the adjacent lateral partition 181. The third guide wall 173 is disposed adjacent to the space formed between the ends of the second guide walls 172.

The exhaust parts 14 are provided on the respective opposite ends of the upper surface of the lower cover body 10 on which the cells are arranged. Each exhaust part 14 has a space defined by the peripheral wall 15 so that leaked electrolyte can be received in the exhaust part 14.

In the present invention, when the storage battery is tilted, the outermost cell 11 that is disposed at the lowermost position is first filled with electrolyte leaked from the first inlet hole 113 and/or the second inlet hole 123.

When the amount of leaked electrolyte exceeds the capacity of the outermost cell, the excess flows into the exhaust cell 12 through the second guide walls 172. The excess electrolyte is discharged along the exhaust path A which is connected to the outlet passage 129 through the space defined between the second receiving wall 125 and the third protective wall 127.

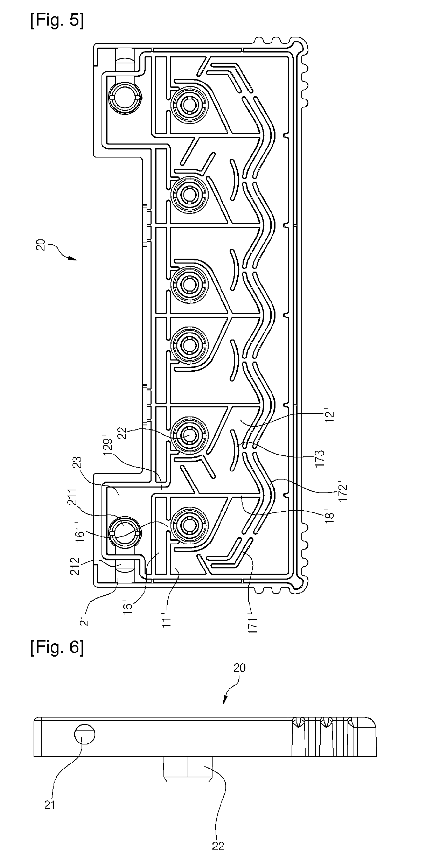

The upper cover body 20 has a shape corresponding to the lower cover body 10. For example, the upper cover body 20 includes the elements 11', 12', 171', 172' and 173' corresponding to the outermost cells 11, the exhaust cells 12 and first, second and third guide walls 171, 172 and 173. The detailed explanation of the construction of the upper cover body 20 that corresponds to that of the lower cover body 10 will be omitted. The upper cover body 20 includes upper exhaust parts 23 that correspond to the respective exhaust parts 14 of the lower cover body 10. An exhaust port 21 is formed through a side surface of each upper exhaust part 23 so that electrolyte or gas leaked from the interior of the storage battery can be discharged to the outside. The upper cover body 20 will be explained with reference to Figs. 4 and 5.

Fig. 5 is a plan view illustrating the upper cover body 20 of the cover having the double sealing structure for storage batteries according to the present invention. Fig. 6 is a side view showing the upper cover body 20 of the cover having the double sealing structure for storage batteries according to the present invention.

Referring to Figs. 4 and 5, the upper cover body 20 includes inlet stoppers 22 which close the first and second inlet holes 113 and 123, and longitudinal partitions 182' and lateral partitions 181' which correspond to the shapes of the outermost cells 11, the exhaust cells 12 and the other cells of the lower cover body 10. The upper cover body 20 further includes guide walls 17' corresponding to the first through third guide walls 171 to 173 of the lower cover body 10.

The upper cover body 20 includes the upper exhaust parts 23 which correspond to the respective exhaust parts 14. Each upper exhaust part 23 has the exhaust port 21 which extends to the side surface of the upper cover body 20.

Each exhaust port 21 includes a port inlet 211 which is filled with a means such as sponge which can absorb fluid such as electrolyte or gas flowing from the exhaust path A, and a discharge hole 212 which extends from the port inlet 211 to the side surface of the upper cover body 20.

The upper cover body 20 has upper collection parts 16' which correspond to the respective collection parts 16 of the lower cover body 10. Each upper collection part 16' has an upper outlet 161' which communicates with the corresponding one of the cells which are formed in the upper cover body 20, such that electrolyte or gas leaked from the inlet hole 113 or 123 can return to the storage battery body 2.

Thanks to the structure of the upper and lower cover bodies 20 and 10, the present invention can widen the range which the storage battery can be tilted without electrolyte or gas being discharged out of the storage battery. Even when electrolyte that has been contained in the cells is leaked, the amount of electrolyte discharged out of the storage battery can be markedly reduced because of an increased capacity with which the cover can receive it. Below, the operation of the present invention will be explained with reference to Fig. 6.

Fig. 6 is a side view showing an example of use of the cover having the double sealing structure for storage batteries according to the present invention.

Referring to Fig. 6, in the case where the cover having the double sealing structure for storage batteries according to the present invention is used in a vehicle, if the vehicle runs on a slope or is parked/stopped on a slope, the storage battery is also tilted to the corresponding inclination.

In this case, because the storage battery is in the tilted state, one of the outermost cells 11 which are disposed on the opposite ends of the storage battery is disposed at a lower position. Then, electrolyte which has been contained in the storage battery body 2 is biased to the lower portion of the tilted storage battery. Thereby, electrolyte may leak out of the storage battery body 2 through the first inlet hole 113.

In the conventional technique, because the exhaust port 21' is formed in the outermost cell 11, when the storage battery is tilted at 30° or more, leaked electrolyte is collected in the outermost cell 11 and then is discharged out of the storage battery through the exhaust port 21'. That is, in the conventional technique, the inclination angle θ1 by which the storage battery is allowed to be tilted is comparatively small, because the exhaust port is formed in the outermost cell 11. In addition, the amount of electrolyte which can be contained in the storage battery cover 1 is comparatively small. Therefore, a loss of electrolyte is increased.

However, the present invention includes the exhaust cells 12 which are disposed adjacent to the respective outermost cells 11. Therefore, even if the amount of electrolyte which is collected in one of the outermost cells 11 exceeds a predetermined level, the excess electrolyte is drawn into the corresponding exhaust cell 12 through the second guide wall 172 and is drawn into the corresponding exhaust port 21 along the exhaust path A.

In the present invention, the inclination angle θ2 by which electrolyte is prevented from leaking out of the storage battery is increased to 50° or more. In other words, the exhaust path A connected to the exhaust port 21 is formed in the exhaust cell 12 which is disposed at a position closer to the medial portion of the storage battery than is the outermost cell 11. Thereby, the inclination angle by which electrolyte is prevented from leaking out of the storage is markedly increased, and the capacity of the internal space of the cover which can contain leaked electrolyte can be increased.

Furthermore, in the present invention, the bottom surface of each cell is configured such that it is inclined downwards towards the corresponding inlet hole 113, 123, and the concave part is formed around the inlet hole 113, 123. Therefore, if the inclination angle at which the storage battery is tilted is comparatively small, electrolyte can easily return to the inlet hole 113, 123.

In more detail, if a vehicle provided with the storage battery which includes the cover having the double sealing structure runs on a slope, the storage battery is also tilted at a predetermined angle by the inclination of the vehicle. Therefore, electrolyte may leak from the outermost cell 11, which is disposed at a lowermost position, among the cells provided in the storage battery cover 1.

Electrolyte that has been leaked from the first inlet hole 113 of the outermost cell 11 is charged into the area, which is defined by the first receiving wall 115, through the first outlet 116 formed between the first protective wall 111 and the first protrusion wall 114. Of course, depending on the extent to which the storage battery is tilted, the electrolyte that has been leaked may be returned to the storage battery body by the inclined surface of the first concave part 112.

As such, the outermost cell 11 is first filed with electrolyte. When the amount of electrolyte that enters the outermost cell 11 reaches a limit of the capacity of the outermost cell 11, the excess electrolyte flows into the corresponding exhaust cell 12 through the first guide walls 171 and the second guide walls 172.

Here, the second guide walls 172 transfer electrolyte onto the surface of the third guide wall 173. Therefore, in the exhaust cell 12, electrolyte that has flowed into the exhaust cell 12 is first charged into a lower portion of the exhaust cell 12, which is adjacent to the lateral partition 18 that becomes a lower end of the exhaust cell 12 after the storage battery has been tilted. Thereafter, if electrolyte that is being charged into the lower portion of the exhaust cell 12 flows over the end of the second receiving wall 125, it enters the exhaust part 14 via the space, formed between the second receiving wall 125 and the third protective wall 127, and the outlet passage 129. Electrolyte that has entered the exhaust part 14 is drawn into the port inlet 211 formed in the upper cover body 20 before being discharged out of the storage battery.

On the contrary to this, if the vehicle provided with the storage battery according to the present invention runs on the slope for only a short time before returning to a level surface, the amount of electrolyte transferred from the outermost cell 11 into the exhaust cell 12 becomes the extent to which it does not flow over the second receiving wall 125.

Further, the inclination of the storage battery is reduced until it becomes parallel to the horizontal line. Then, electrolyte that is being charged into the exhaust cell 12 is drawn into the second inlet hole 123 through the first inlet 128 which is formed by space defined between the second protective wall 121 and the third protective wall 127, thus being returned into the storage battery.

As described above, in the present invention, the exhaust port is formed in the cell that is disposed at a position adjacent to the outermost cell 11 and closer to the medial portion of the storage battery than is the outermost cell 11. Therefore, the capacity of the internal space of the lower cover body 10 which can contain electrolyte leaked from the storage battery body 2 is markedly increased. Furthermore, the range of the angle, to which the storage battery can be tilted without electrolyte leaking out of the storage battery, can be markedly increased. Therefore, the present invention can reduce a loss due to leakage of electrolyte and is advantageous for maintenance such as recharging.

### Industrial Applicability

Although the preferred embodiment of the present invention has been disclosed for illustrative purposes, those skilled in the art will appreciate that various modifications, additions and substitutions are possible, without departing from the scope and spirit of the invention as disclosed in the accompanying claims.

## Claims

1. A cover having a double sealing structure for a storage battery comprising a storage battery body containing electrolyte therein, the cover sealing an upper surface of the storage battery body and comprising:
a lower cover body comprising a plurality of cells each of which has an inlet hole communicating with the storage battery body disposed under the lower cover body so that the electrolyte is injected into the storage battery body through the inlet hole; and
an upper cover body coupled to an upper portion of the lower cover body, with an exhaust port formed on each of opposite ends of the upper cover body so that electrolyte or gas is discharged out of the storage battery through the exhaust port,
wherein in the lower cover body, exhaust cells are formed at positions closer to a medial portion of the storage battery than are respective outermost cells that are disposed at outermost positions, each of the exhaust cells having an outlet passage that guides leaked electrolyte or gas towards the exhaust port.

2. The cover according to claim 1, wherein the exhaust port is formed in a central portion of the upper cover body.

3. The cover according to claim 1, wherein the lower cover body comprises:
a partition comprising a pair of longitudinal partitions facing each other and extending in a longitudinal direction of the storage battery to define the outermost cells and the exhaust cells, and a plurality of lateral partitions disposed between the pair of longitudinal partitions at positions spaced apart from each other, the lateral partitions extending in a lateral direction of the storage battery;
a guide wall comprising a pair of walls spaced apart from each other, the guide wall extending through the partition in a transverse direction of the partition so that electrolyte can flow between the corresponding outermost cell and the corresponding exhaust cell; and
an exhaust part disposed in each of opposite ends of the lower cover body and extending in the lateral direction of the storage battery to form a space therein so that electrolyte transferred from the corresponding exhaust cell through the outlet passage is received in the exhaust part.

4. The cover according to claim 3, wherein each of the outermost cells comprises:
a concave part forming a bottom surface inclined downwards towards a first inlet hole formed in the outermost cell to communicate with an interior of the storage battery body;
a first protective wall disposed on the inclined bottom surface of the concave part, the first protective wall extending at a first end thereof from the corresponding lateral partition that separates the outermost cell from the adjacent cell, such that a second end of the first protective wall is spaced apart from the corresponding longitudinal partition to form an outlet for electrolyte leaked from the inlet hole;
a first protrusion wall protruding from the corresponding longitudinal partition between the first inlet hole and the first outlet; and
a first receiving wall extending in an inclined direction from the lateral partition disposed at a position opposite to the lateral partition that separates the outermost cell from the adjacent cell, so that a space for receiving electrolyte leaked from the first outlet is defined.

5. The cover according to claim 3, wherein the outlet passage is formed by opening a portion of the corresponding longitudinal partition that is brought into close contact with the exhaust part, so that the corresponding exhaust cell communicates with the exhaust part through the outlet passage.

6. The cover according to claim 3, wherein each of the exhaust cells comprises:
a second concave part forming a bottom surface inclined downwards towards a second inlet hole formed in the exhaust cell to communicate with an interior of the storage battery body;
a second protective wall disposed on the inclined bottom surface of the second concave part, the second protective wall extending at a first end thereof from the corresponding lateral partition that separates the exhaust cell from an adjacent cell;
a third protective wall disposed at a position spaced apart from the second protective wall and extending towards the corresponding longitudinal partition such that a space is formed between a first end of the third protective wall and the longitudinal partition, thus forming a second outlet through which electrolyte leaked from or returned to the second inlet hole flows;
a second receiving wall extending diagonally from the lateral partition disposed at a position opposite to the lateral partition that separates the exhaust cell from an adjacent cell; and
a second protrusion wall protruding from the corresponding longitudinal partition in front of the second outlet.

7. The cover according to claim 6, wherein the third protective wall extends in an inclined direction such that a second end thereof faces the second receiving wall, thus forming a space for receiving electrolyte transferred from the guide wall.

8. The cover according to claim 7, wherein the third protective wall is spaced apart from the second receiving wall to form an inlet communicating with the second concave part.

9. The cover according to any one of claims 1 through 8, wherein a bottom surface of each of the outermost cell and the exhaust cell is inclined downwards towards the corresponding inlet hole.

10. The cover according to claim 1, wherein the guide wall comprises:
first guide walls disposed in each of the outermost cell and extending in the lateral direction to guide electrolyte, the first guide walls being spaced apart from each other;
second guide walls provided in each of the lateral partitions that separate the cells from each other and extending in a transverse direction of the lateral partition, the second guide walls being spaced apart from each other to form a passage through which electrolyte flows, so that the electrolyte transferred from the first guide walls flows into the corresponding exhaust cell through the passage; and
a third guide wall disposed in the exhaust cell and extending a predetermined length such that a medial portion of the third guide is disposed adjacent to ends of the second guide walls so that the electrolyte transferred by the second guide wall is guided towards the outlet passage.

11. The cover according to claim 10, wherein each of the second guide walls extends in a V shape.

12. A cover having a double sealing structure for a storage battery comprising a storage battery body containing electrolyte therein, the cover sealing an upper surface of the storage battery body and comprising:
a lower cover body comprising a terminal area having electrodes through which electricity flows from or into the storage battery body, and a cell area having a plurality of cells each of which has an inlet hole so that electrolyte is injected into the storage battery body through the inlet hole; and
an upper cover body comprising a plurality of cells corresponding to the cells of the cell area of the lower cover body, the upper cover body sealing an upper surface of the cell area,
wherein the plurality of cells of the cell area of the lower cover body are arranged in one direction, and the cell area has exhaust parts on respective opposite ends thereof, each of the exhaust parts extending in a vertical direction to form a space in which electrolyte leaked from the inlet hole is collected,
the upper cover body comprises upper exhaust parts each of which has a shape corresponding to a shape of the corresponding exhaust part of the lower cover body, and
an exhaust hole is formed in a side surface of the upper exhaust part so that electrolyte or gas collected in the corresponding exhaust part is discharged out of the storage battery through the exhaust hole.

13. The cover according to claim 12, wherein in the cell area of the lower cover body, among the cells arranged in the one direction, each of the cells that are disposed at positions closer to a medial portion of the storage battery than are the respective cells that are disposed at outermost positions comprises an exhaust cell having an outlet passage communicating with the corresponding exhaust part so that leaked electrolyte or gas is transferred into the exhaust part through the outlet passage.

14. The cover according to claim 12, wherein the cell area is partitioned by a plurality of lateral partitions into a plurality of portions, each of the lateral partitions comprising a pair of guide walls extending through the lateral partition in a transverse direction of the lateral partition, the guide walls being spaced apart from each other to form a passage through which leaked electrolyte flows between the corresponding adjacent cells.

15. The cover according to claim 14, wherein each of the exhaust cell comprises:
a concave part forming a bottom surface inclined downwards towards the inlet hole formed in the exhaust cell to communicate with an interior of the storage battery body;
a second protective wall disposed on the inclined bottom surface of the concave part, the second protective wall extending at a first end thereof from the corresponding lateral partition that separates the exhaust cell from an adjacent cell;
a third protective wall disposed at a position spaced apart from the second protective wall and extending towards the corresponding longitudinal partition such that a second outlet is formed between the third protective wall and the longitudinal partition so that electrolyte leaked out from or returned to the inlet hole flows through the second outlet;
a receiving wall extending diagonally from the lateral partition disposed at a position opposite to the lateral partition that separates the exhaust cell from the adjacent cell; and
a protrusion wall protruding from the corresponding longitudinal partition in front of the second outlet.

16. The cover according to claim 15, wherein the third protective wall is bent and extended in an inclined direction such that an end thereof faces the second receiving wall, thus forming a space for receiving electrolyte transferred from the guide wall.

17. The cover according to any one of claims 12 through 16, wherein the cell area has a bottom surface inclined downwards towards the inlet holes.
